Europäisches Patentamt

European Patent Office

Office européen des brevets

(19)

(11) Numéro de publication: **0 225 265 B1**

(12) **FASCICULE DE BREVET EUROPEEN**

(45) Date de publication de fascicule du brevet:
24.04.91

(51) Int. Cl.⁵: **A61C 9/00**

(21) Numéro de dépôt: 86420283.3

(22) Date de dépôt: 20.11.86

(54) **Seringue pour l'injection de produits pâteux destinés à la prise d'empreintes dentaires, avec dispositif de remplissage incorporé.**

(30) Priorité: 25.11.85 FR 8517550

(43) Date de publication de la demande:
10.06.87 Bulletin 87/24

(45) Mention de la délivrance du brevet:
24.04.91 Bulletin 91/17

(84) Etats contractants désignés:
BE CH DE ES FR GB IT LI NL

(56) Documents cités:
DE-C- 675 455
GB-A- 549 938
US-A- 2 825 134
US-A- 2 869 763

(73) Titulaire: STABYL s.a.r.l.
Zirst Chemin des Clos
F-38240 Meylan(FR)

(72) Inventeur: Francois, Michel
135 Chemin de Ray Buisson
F-38330 Saint Ismier(FR)

(74) Mandataire: de Beaumont, Michel
1bis, rue Champollion
F-38000 Grenoble(FR)

## Description

La présente invention concerne une seringue avec système de remplissage incorporé pour l'injection de produits pâteux destinés à la prise d'empreintes dentaires.

Les chirurgiens dentistes utilisent actuellement pour la prise d'empreintes plusieurs types de matériaux. Tous ces matériaux, au moment de l'injection ont une consistance pâteuse. Les matériaux, non limitatifs, pour lesquels cette invention offre un intérêt particulier sont de deux types.

Les alginates, composés d'algues en poudre, que l'utilisateur au moment de leur emploi doit mélanger dans un bol avec de l'eau afin d'obtenir un produit pâteux, qui gélifie au bout de quelques minutes.

Les silicones, thiocols ou élastomères, qui sont des pâtes visqueuses que l'on malaxe, avant leur utilisation sur une plaque ou sur un bloc de mélange, avec une pâte ou un liquide catalyseur ou durcisseur. Ces matériaux polymérisent, eux aussi, au bout de quelques minutes.

Le problème posé par tous ces matériaux est le temps, relativement court, de 2 à 4 minutes en moyenne, dont l'utilisateur dispose entre le moment où il commence le malaxage et le moment où le matériau commence sa prise ou sa gélification, et donc, n'est plus injectable.

Les seringues, destinées à l'injection de ces produits d'empreinte pâteux, telles que la seringue décrite dans le document US-A-2869763 posent toutes le problème de leur remplissage, car la section de leur alésage intérieur est faible.

Il existe plusieurs types de techniques ou de systèmes de remplissage. Tout d'abord, dans la majeure partie des cas, les seringues se remplissent en raclant sur le bol de mélange leur partie arrière, afin d'y faire pénétrer, par gravitation le matériau. Cette technique est caractérisée par la mauvaise qualité du remplissage, car elle entraîne nécessairement un mélange d'air et de matériau dans la seringue, induisant, au moment de l'injection, des bulles d'air, très préjudiciables à la qualité de l'empreinte. De plus, il est très difficile, en un minimum de temps, de racler, sur toute la surface du bloc de mélange, la totalité du mélange ; il en résulte une perte de matériau.

Il existe également des seringues avec des systèmes de chargeurs, parties intégrantes ou ajoutées, puis enlevés de l'arrière de la seringue, eux-mêmes remplis avec une spatule servant au prélèvement du matériau sur le bloc de mélange ou dans le bol de malaxage. Ces procédés sont peu satisfaisants car ils entraînent une perte de temps par la manipulation d'accessoires de remplissage, tels que pistons des chargeurs intégrés ou ensembles chargeurs plus pistons amovibles.

Ces procédés entraînent également une perte de matériau, et sont souvent d'une manipulation compliquée souillant souvent la seringue.

Il existe enfin des systèmes de seringues à double corps et double pistons, pouvant même servir au malaxage de certains produits d'empreintes très fluides. Ces systèmes n'apportent pas la solution à l'injection de produits moins fluides et, par leur conception, sont souvent peu pratiques, encombrants et inadaptés pour des injections de petites quantités de matériau.

L'examen de ces techniques montre que, si certaines d'entre elles en résolvent une partie, aucune ne résoud entièrement à elle seule tous les problèmes de rapidité d'exécution, d'efficacité, d'économie de matériau, de propreté et de simplicité d'emploi.

L'objet de l'invention est de prévoir une seringue permettant de résoudre simultanément tous ces problèmes.

Pour atteindre cet objet, la présente invention prévoit une seringue pour l'injection de produits pâteux comprenant un cylindre dans lequel peut coulisser un piston, et comprenant en outre un tube de prélèvement fendu sur la plus grande partie de sa longueur et muni d'un moyen de préhension tel qu'une bague, le diamètre interne du cylindre correspondant sensiblement au diamètre externe du tube, de sorte que, quand le tube est disposé dans le cylindre, cet ensemble définit une chambre d'injection délimitée par la paroi interne du tube et, au niveau de l'ouverture de celui-ci, par la paroi interne du cylindre.

Selon un mode de réalisation de l'invention, l'ouverture de la fente est comprise entre le quart et la moitié de la périphérie du tube.

On décrira ci-après un mode de réalisation de la présente invention, en relation avec les figures jointes parmi lesquelles :

la figure 1 est une vue en coupe du corps principal de la seringue, avec son embout d'injection et un écrou de fixation ;

la figure 2 est une vue du tube de prélèvement selon l'invention ;

la figure 3 est une coupe suivant la ligne AA de la figure 2 de ce tube de prélèvement agrandie deux fois ;

la figure 4 est une vue en coupe d'un piston d'injection ; et

les figures 5, 6 et 7 sont destinées à illustrer le mode d'utilisation d'une seringue selon la présente invention.

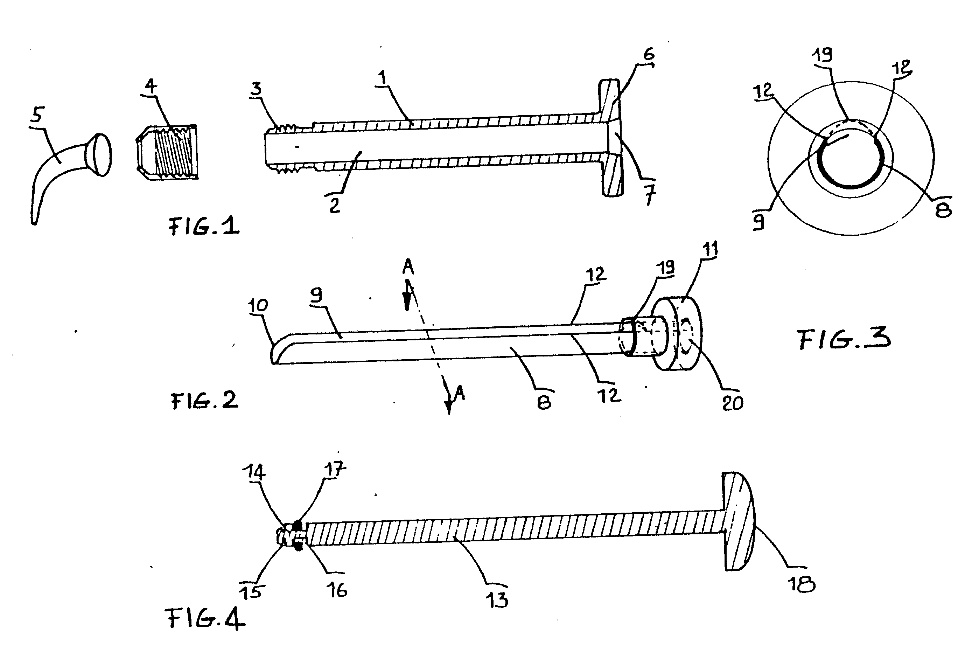

Comme le représente la figure 1, le corps principal 1 de la seringue est composé d'un tube alésé axialement selon un diamètre donné (2) ; il comporte à son extrémité avant 3 un filetage où vient se visser un écrou 4 bloquant l'embout d'injection 5. Sa partie arrière comporte une colerette 6 destinée à maintenir le corps de seringue 1 entre les doigts de l'utilisateur. L'orifice arrière de la seringue comporte un chanfrein 7 facilitant la pénétration du tube de prélèvement décrit ci-après.

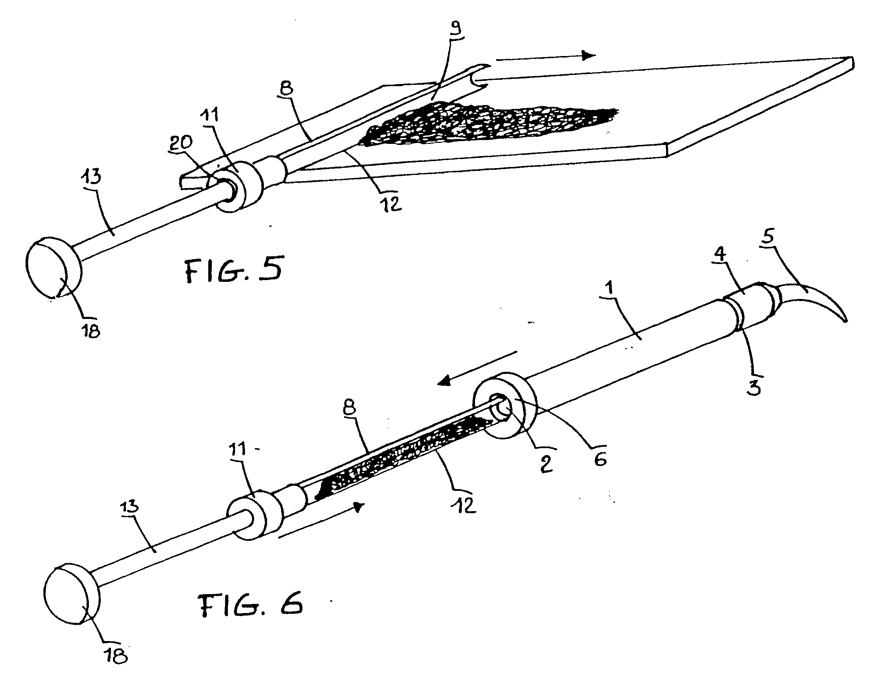

Comme le représentent les figures 2 et 3, le tube de prélèvement 8, de diamètre extérieur égal à l'alésage 2, est fendu sur au moins une grande partie de sa longueur. La fente 9 a une ouverture comprise entre environ le quart et environ la moitié de la circonférence du tube. L'extrémité 10 du tube est en biseau ou arrondie afin de faciliter la pénétration dans le corps de la seringue 1 par l'orifice chanfreiné 7. Sa partie arrière traverse une bague 11 servant à la préhension et à la manipulation de l'ensemble. La partie fendue 9 traverse également cette bague. La fente 9 génère deux arêtes 12 qui sont taillées en biseau (aiguisées) afin de bien pouvoir racler le matériau d'empreinte lors du prélèvement.

L'orifice avant de la bague de préhension 11 est muni d'un chanfrein 19. L'orifice arrière de cette bague 11 et donc du tube de prélèvement 8 est muni d'un chanfrein 20.

Comme le représente la figure 4, le piston 13 comporte en sa partie avant 14, une première rainure annulaire 15 ainsi qu'une deuxième gorge 16 recevant un joint torique 17. Cette gorge 16 est plus large que la section du joint torique 17 et a un diamètre inférieur au diamètre intérieur du joint 17. En sa partie arrière le piston 13 comporte un bouton poussoir 18.

A titre d'exemple, on décrira ci-après une manipulation.

Avant d'effectuer le mélange du produit pâteux d'empreinte, l'utilisateur fixe par l'intermédiaire de l'écrou 4 l'embout d'injection 5 sur le filetage 3 du corps principal 1 de la seringue. Il dispose le piston 13 dans le tube de prélèvement 8 en faisant pénétrer sa partie avant 14 par l'orifice chanfreiné 20 le joint torique 17 ne dépassant pas la limite du chanfrein 19. Les deux ensembles ainsi constitués sont laissés en attente pendant l'exécution du mélange du produit pâteux.

Le mélange réalisé, l'utilisateur saisit par la bague de préhension 11 l'ensemble tube 8 plus piston 13. Il dispose la partie fendue 9 face au produit à prélever, l'une des arêtes 12 étant au contact de la surface du bloc de malaxage ou de la paroi du bol de mélange qui, il faut le préciser, est toujours souple et possède une paroi verticale.

Comme cela est représenté en figure 5, l'utilisateur déplace cet ensemble en maintenant l'arête 12 au contact de la surface de mélange et remplit ainsi par la fente 9 le tube de prélèvement 8.

Après le prélèvement, comme cela est représenté en figure 6, l'utilisateur, tenant toujours la bague de préhension 11, présente l'extrémité 10 biseautée ou arrondie, face à l'orifice arrière muni d'un chanfrein 7, et pousse à fond le tube de prélèvement 8 dans l'alésage interne 2 du corps principal 1 de la seringue.

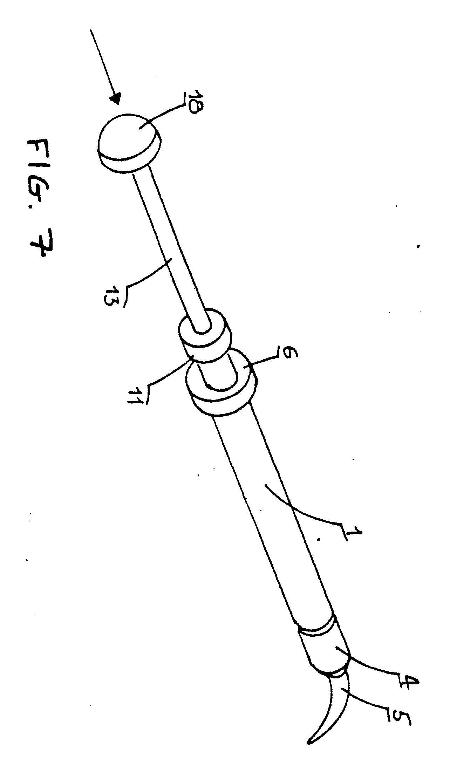

Cette opération effectuée, il ne lui reste plus, comme cela est représenté en figure 7, qu'à injecter le produit pâteux en appuyant, par le bouton poussoir 18, pour faire pénétrer le piston 13 dans l'ensemble corps principal 1 de seringue plus tube de prélèvement 8. Il agit alors comme avec une seringue classique.

L'injection étant achevée, l'utilisateur attend que le matériau ait effectué sa prise avant de nettoyer sa seringue. Il suffit alors de retirer le piston 13 en le tournant légèrement. Le joint torique 17 passe sans problème par l'alésage interne de la bague de préhension 11 grâce au chanfrein 19. Le matériau gélifié ou polymérisé qui demeurait dans l'embout d'injection 5 restant solidaire de l'extrémité 14 du piston 13, car s'étant serti dans la première rainure annulaire 15 de ce dernier. Cette opération étant effectuée, l'utilisateur retire ensuite le tube de remplissage 8 du corps principal 1, en le tournant légèrement. Le passage d'un écouvillon suffit alors au nettoyage de tous les éléments composant cette seringue.

L'exposé de cette manipulation démontre sa simplicté, sa rapidité, et l'efficacité du remplissage de cette seringue, évitant ainsi toute perte de temps et toute perte de matériau.

## Revendications

1. Seringue pour l'injection de produits pâteux comprenant un cylindre (1), un tube de prélèvement (8) ayant une fente et étant muni d'un moyen de préhension (11) tel que bague, le diamètre interne du cylindre correspondant sensiblement au diamètre externe du tube et un piston (13) pouvant coulisser dans le tube,

   caractérisée en ce:

   que la fente dudit tube s'étend sur la plus grande partie de sa longueur,
   que le remplissage s'effectue avec ledit tube entièrement retiré du cylindre et
   que quand le tube est disposé dans le cylindre, cet ensemble définit une chambre d'injection délimitée par la paroi interne du tube et, au niveau de l'ouverture de celui-ci, par la paroi interne du cylindre.

2. Seringue selon la revendication 1, caractérisée en ce que l'ouverture de la fente (9) est comprise entre le quart et la moitié de la périphérie du tube.

3. Seringue selon l'une des revendication 1 ou 2, caractérisée en ce que la partie fendue (9) du tube (8) traverse la bague de préhension (11), la fente (9) s'étendant alors sur toute la longueur du tube (8).

4. Seringue selon l'une quelconque des revendications précédentes, caractérisée en ce que le moyen de préhension (11) possède en sa partie antérieure un chanfrein (19).

5. Seringue selon l'une quelconque des revendications précédentes, caractérisée en ce que les deux arêtes de la fente axiale (9) du tube de prélèvement (8) sont aiguisées.

6. Seringue selon l'une quelconque des revendications précédentes, caractérisée en ce que le tube de prélèvement (8) possède une extrémité avant (10) arrondie ou en biseau.

7. Seringue selon l'une quelconque des revendications précédentes, caractérisée en ce que le moyen de préhension (11) possède en son orifice arrière un chanfrein (20).

8. Seringue selon la revendication 1, caractérisée en ce que le piston (13) possède en sa partie avant (14), avant le joint de piston, une rainure annulaire (15) destinée à retenir le reste, non injecté, du produit d'empreinte pâteux, après sa prise.

9. Seringue selon la revendication 1, caractérisée en ce que le piston d'injection (13) comporte en sa partie avant (14) une gorge (16) recevant un joint torique (17), ladite gorge (16) étant plus large que la section du joint, et d'un diamètre inférieur au diamètre intérieur de ce joint.

**Claims**

1. A syringe for injecting a pasty material comprising a cylinder (1), a sampling tube (8) provided with a slot and a handling means (11) such as a ring, the internal diameter of the cylinder substantially corresponding to the external diameter of the tube, and a piston (13) slidable in the tube, characterized in that: the slot of said tube extends on the larger part of its length, the filling is made with said tube fully extracted from the cylinder and, when the tube is arranged into the cylinder, this set defines an injection chamber delimited by the internal wall of the tube and, in front of the slot of the tube, by the internal wall of the cylinder.

2. The syringe of claim 1, characterized in that the width of the slot (9) is comprised between one quarter and one half of the periphery of the tube.

3. The syringe of claim 1 at 2, characterized in that the slotted portion (9) of the tube (8) crosses the handling ring, (11), the slot (9) extending on the whole length of the tube (8).

4. The syringe of any of claims 1 to 3, characterized in that the handling means is bevelled on its front side.

5. The syringe of any of claims 1 to 4, characterized in that the two axial limiting lines of the slot (9) of the sampling tube (8) are sharpened.

6. The syringe of any of claims 1 to 5, characterized in that the front extremity (10) of the sampling tube (8) is bevelled or rounded.

7. The syringe of any of claims 1 to 6, characterized in that the rear aperture of the handling means is bevelled (20).

8. The syringe of claim 1, characterized in that the piston (13) comprises, close to its tip (14) and ahead the piston ring, an annular groove (15) for holding the non injected remaining portion of the pasty material after its hardening.

9. The syringe of claim 1, characterized in that the injection piston (13) comprises, close to its tip (14) a groove (16) for receiving an O-ring (17), said groove (16) being wider than the cross-section of the O-ring and having a diameter smaller than the internal diameter of said O-ring.

**Ansprüche**

1. Spritze zum Injizieren pastöser Produkte, mit einem Zylinder (1), einem Probenrohr (8), das einen Schlitz hat und das mit einer Greifeinrichtung (11) so wie einem Ring versehen ist, wobei der innere Durchmesser des Zylinders im wesentlichen dem äußeren Durchmesser des Rohres entspricht, und einem in dem Rohr gleitbaren Kolben (13), **dadurch gekennzeichnet,** daß der Schlitz des Rohres sich über den größeren Teil seiner Länge erstreckt,

daß die Füllung bei vollständig aus dem Zylinder zurückgezogenem Rohr bewirkt wird und daß, wenn das Rohr in dem Zylinder angeordnet ist, diese Anordnung eine durch die Innenwand des Rohres und, auf der Höhe von dessen Öffnung, von der Innenwand des Zylinders begrenzte Injektionskammer definiert.

2. Spritze nach Anspruch 1, dadurch gekennzeichnet, daß die Öffnung des Schlitzes (9) zwischen einem Viertel und der Hälfte des Außenumfanges des Rohres umfaßt.

3. Spritze nach Anspruch 1 oder 2, dadurch gekennzeichnet, daß der mit Schlitz versehene Bereich (9) des Rohres (8) den Greifring (11) durchquert, der Schlitz (9) sich somit über die gesamte Länge des Rohres (8) erstreckt.

4. Spritze nach einem der vorangehenden Ansprüche, dadurch gekennzeichnet, daß die Greifeinrichtung (11) in ihrem vorderen Bereich eine Fase (19) besitzt.

5. Spritze nach einem der vorangehenden Ansprüche, dadurch gekennzeichnet, daß die beiden Kanten des axialen Schlitzes (9) des Probenrohres (8) angeschliffen sind.

6. Spritze nach einem der vorangehenden Ansprüche, dadurch gekennzeichnet, daß das Probenrohr (8) ein abgerundetes oder flächiges Vorderende besitzt.

7. Spritze nach einem der vorangehenden Ansprüche, dadurch gekennzeichnet, daß die hintere Öffnung der Greifeinrichtung (11) eine Fase (20) besitzt.

8. Spritze nach Anspruch 1, dadurch gekennzeichnet, daß der Kolben (13) in seinem vorderen Bereich (14), vor dem Kolbenring, eine ringförmige Nut (15) zum Zurückhalten des nicht ausgestoßenen Restes des Zahnabdruckpastenproduktes nach dem Festwerden besitzt.

9. Spritze nach Anspruch 1, dadurch gekennzeichnet, daß der Injektionskolben (13) in seinem vorderen Bereich (14) eine Kehlung (16) aufweist, welche einen O-Ring (17) aufnimmt, wobei die Kehlung (16) weiter ist als der Querschnitt des Ringes und einen kleineren Durchmesser als den Innendurchmesser des Ringes hat.

FIG.1

FIG.2

FIG.3

FIG.4

FIG.5

FIG.6

FIG. 7